# EUROPÄISCHE PATENTSCHRIFT

(11) **EP 2 157 407 B1**
(45) Veröffentlichungstag und Bekanntmachung des Hinweises auf die Patenterteilung: **12.10.2011**
(21) Anmeldenummer: 09164363.5
(22) Anmeldetag: 02.07.2009
(51) Int. Cl.: G01C 21/34, G08G 1/0968, F02D 41/02

(54) **Verfahren und Vorrichtung zur Berechnung einer Fahrroute**
Method and device for calculating a transport route
Procédé et dispositif de calcul d'un parcours

(30) Priorität: 19.08.2008 DE 102008041348
(43) Veröffentlichungstag der Anmeldung: 24.02.2010
(73) Patentinhaber: ROBERT BOSCH GMBH, 70442 Stuttgart (DE)
(72) Erfinder: Naberfeld, Frank, 44357, Dortmund (DE)

(56) Entgegenhaltungen:
- EP-A1- 1 593 937
- WO-A1-2009/056389
- DE-A1- 10 356 459
- DE-A1- 19 948 236
- JP-A- 2005 214 096
- US-A1- 2005 166 580
- US-A1- 2007 125 074

## Beschreibung

Die Erfindung betrifft ein Verfahren zur Berechnung einer Fahrroute gemäß Patentanspruch 1 und eine Vorrichtung zur Berechnung einer Fahrroute gemäß Patentanspruch 9.

### SLand der Technik

Im Stand der Technik sind verschiedene Verfahren zur Berechnung einer Fahrroute für ein Fahrzeug bekannt. In der nicht vorveröffentlichten deutschen Patentanmeldung mit der Anmeldenummer DE 10 2007 052 292 ist ein Verfahren zur Berechnung einer Fahrroute beschrieben, bei der die Navigationsvorrichtung Signale oder Daten bezüglich der Steuerung der Regeneration einer Abgasnachbehandlungsvorrichtung berücksichtigt.

Aus JP 2005-214096 ist ein Navigationssystem bekannt, bei dem eine Navigationsroute zur Regenerierung eines Abgasfilters berechnet wird, bei der die Regeneration hoch ist. Dem Fahrer werden bei Erreichen eines Beladungszustands des Abgasfilters mehrere Routen zur Auswahl angegeben.

Aus DE 103 56 459 A1 ist ein Verfahren und eine Vorrichtung zum Navigieren eines Kraftfahrzeugs bekannt. Dabei ist ein Sensor zur Erfassung einer messgröße eines Fahrzeugzustands vorgesehen, wobei das Navigationssystem die Messgröße berücksichtigt. Als Messgröße wird beispielsweise der Füllstand eines Dieselpartikelfilters und gegebenenfalls dessen Temperatur erfasst. Bei einem voller werden Filter wird dem Nutzer eine Strecke vorgeschlagen, bei der die Mindesttemperatur zum Verbrennen der Partikel möglichst schnell erreicht wird. Aus EP 1 593 937 A1 ist ein Verfahren zum Ausarbeiten einer Route in einem Navigationssystem bekannt. Bei der Ausarbeitung der Route wird ein faktor berücksichtigt, der den Energieverbrauch zum Zurücklegen der Route beeinflusst.

Aus US 2007/0125074 A1 ist ein Verfahren zur Berechnung einer Fahrroute für ein Fahrzeug bekannt, wobei ausgehend von einem Startpunkt zu einem Zielpunkt unter Berücksichtigung einer digitalen Straßenkarte eine nach einem vorgegebenen Parameter optimale Fahrroute berechnet wird. Für die Berechnung der Fahrroute wird ein Zustand eines Partikelfilters eines Abgassystem, insbesondere ein Beladungszustand, berücksichtigt und eine Fahrroute gewählt, die vorteilhafter für den Zustand des Partikelfilters ist.

Die Aufgabe der Erfindung besteht darin, ein verbessertes Verfahren zur Berechnung einer Fahrroute und eine verbesserte Vorrichtung zur Berechnung einer Fahrroute bereit zu stellen.

### Offenbarung der Erfindung

Die Aufgabe der Erfindung wird durch das Verfahren gemäß Patentanspruch 1 und durch die Vorrichtung gemäß Patentanspruch 9 gelöst.

Ein Vorteil des erfindungsgemäßen Verfahrens besteht darin, dass eine Fahrroute ausgewählt wird, die positiv für einen Dieselpartikelfilter ist. Der Vorteil des Verfahrens wird dadurch erreicht, dass bei der Berechnung der Fahrroute ein Zustand des Partikelfilters berücksichtigt wird. Damit hat die Navigationsvorrichtung die Möglichkeit, eine Fahrroute zu wählen, die positiv für den Zustand des Partikelfilters des Abgassystems ist. Die Navigationsvorrichtung wählt die zu befahrende Route anhand mindestens eines Parameters, wie z.B. der zu erwartenden Fahrzeit und der Länge der möglichen Route. Dabei kann es vorkommen, dass verschiedene mögliche Routen einen ähnlichen guten Kompromiss zwischen Fahrzeit und Fahrstrecke aufweisen, obwohl die Routen vom Streckenverlauf her sehr unerschiedlich sind. Ein einfaches Beispiel ist hierbei eine Route über einen Autobahnring einer Stadt und eine alternative Route durch ein Stadtgebiet. Hierbei weist die Route über das Stadtgebiet häufig eine längere Fahrzeit, aber auch eine kürzere Route auf. Das Navigationsgerät wählt in Abhängigkeit vom Zustand des Dieselpartikelfilters die günstigere Fahrroute, aus, auch wenn dadurch die Fahrzeit oder Fahrstrecke verlängert wird.

In der erfindungsgemäßen Ausführungsform wird der Zustand des Partikelfilters aufgrund eines theoretischen Modells berechnet. Die Berechnung wird insbesondere vom Navigationssystem durchgeführt. Dabei kann das Navigationssystem einen Beladungszustand des Partikelfilters aufgrund der zurückgelegten Fahrstrecke und/oder eines gefahrenen Geschwindigkeitsprofils ermitteln. Auf diese Weise ist es nicht erforderlich, den Beladungszustand mit Hilfe eines Sensors zu erfassen.

Weitere vorteilhafte Ausführungsformen der Erfindung sind in den abhängigen Ansprüchen angegeben.

In einer weiteren Ausführungsform kann über eine Eingabe eine Option für die Berechnung der Fahrroute vom Fahrer gewählt werden. Auf diese Weise kann der fahrer individuell eine Gewichtung in Bezug auf die Berücksichtigung des Zustands des Partikelfilters wählen. Somit känn er vorgeben, ob beispielsweise eine längere Fahrzeit oder ein höherer Kraftstoffverbrauch zugunsten einer geringeren Beladung des Partikelfilters oder zugunsten einer Entladung des Partikelfilters in Kauf genommen werden soll.

In einer weiteren Ausführungsform wird bei der Berechnung der Fahrroute zusätzlich ein Zustand einer weiteren Komponente, insbesondere der Beladungszustand eines Katalysators, die Temperatur der Brennkraftmaschine oder die Temperatur des Bremssystems berücksichtigt. Mit diesen Zuständen kann zusätzlich eine weitere Optimierung der gewählten Fahrroute erreicht werden.

In einer weiteren Ausführungsform verfügt das Navigationssystem über die Information, welche Fahrgeschwindigkeit und/oder welche Zeitdauer und Fahrgeschwindigkeit für den vorliegenden Zustand des Partikelfilters vorteilhaft sind. Vorteilhaft kann beispielsweise die Verminderung der Zunahme der Beladung des Partikelfilters oder die Reduzierung der Beladung des Partikelfilters sein. Zudem kann die Information über entsprechend dem vorliegenden Beladungszustand des Partikelfilters vorteilhafte Fahrgeschwindigkeit und/oder Zeitdauer und Fahrgeschwindigkeit der Navigationsvorrichtung insbesondere von einem Steuergerät übermittelt werden. Auf diese Weise können verschiedene Typen von Partikelfilter bei der optimalen Berechnung der Fahrroute berücksichtigt werden.

In einer weiteren Ausführungsform wird als Zustand des Partikelfilters ein festgelegter Kapazitätsbereich für die Beladung des Partikelfilters berücksichtigt. Dabei kann insbesondere ein Kapazitätsbereich vorgesehen sein, der beispielsweise bei 80% der Kapazitätsgrenze liegt und somit eine kritische Beladung des Partikelfilters anzeigt. Das Vorliegen einer Kapazität des Partikelfilters über den vorgegebenen Grenzbereich von 80% führt bei der Berechnung einer Route dazu, dass Strecken mit einem fließenden Verkehr bevorzugt gegenüber Strecken mit einer Wahrscheinlichkeit für einen Stop-and-Go-Verkehr berücksichtigt werden.

In einer weiteren Ausführungsform ist ein Wert, beispielsweise ein prozentualer Wert von 10% vorgegeben, um den sich der vorgegebene, zu optimierende Parameter wie z. B. Fahrzeit oder Fahrstrecke zugunsten einer geringeren Beladung oder zugunsten einer Entladung des Partikelfilters bei der Berechnung der Fahrroute verschlechtern darf. Der vorgegebene Wert und/oder Parameter kann von dem Fahrer beispielsweise individuell eingestellt werden. Somit kann der Fahrer wählen, ob für ihn die Einhaltung des vorgegebenen Parameters, wie z.B. einer kurzen Fahrstrecke oder einer kurzen Reisezeit, wichtiger ist als die Berücksichtigung des Zustands des Partikelfilters. Das Navigationsgerät berücksichtigt bei der Berechnung der Fahrroute die Eingabe des Fahrers.

In einer weiteren Ausführungsform kann der Fahrer eine Option wählen und festlegen, die optimiert für eine Regeneration des Partikelfilters ist.

### Kurze Beschreibung der Zeichnungen

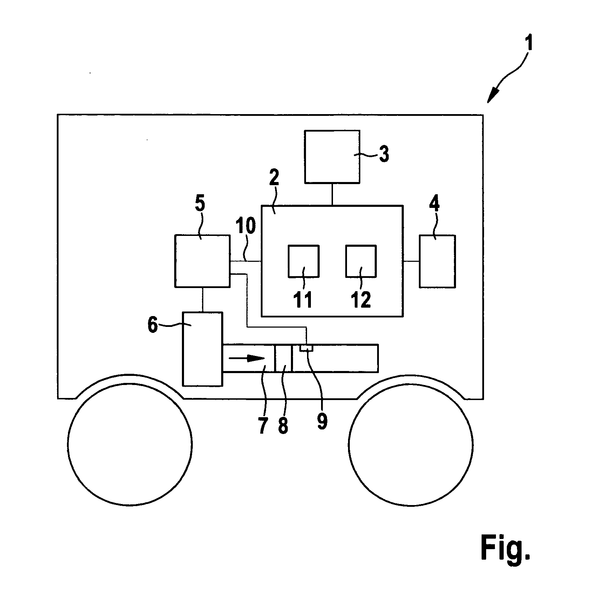

Die Figur zeigt in einer schematischen Darstellung ein Fahrzeug mit einer Brennkraftmaschine mit einem Abgassystem mit einem Dieselpartikelfilter und ein Navigationsgerät.

### Ausführungsform der Erfindung

Die Figur zeigt in einer schematischen Darstellung ein Fahrzeug 1 mit einem Navigationsgerät 2. Das Navigationsgerät 2 verfügt über eine Recheneinheit 11 und über ein GPS-System 12, mit dem die Position des Fahrzeugs auf einer digitalen Straßenkarte und die Fahrstrecke und die Geschwindigkeit des Fahrzeuges ermittelt werden kann. Die digitale Karte ist in einem Datenspeicher 3 abgelegt, der mit dem Navigationsgerät 2 verbunden ist. Weiterhin weist das Navigationsgerät 2 ein Ein-/Ausgabemittel 4 auf, mit dem Informationen, beispielsweise in Form einer Bildschirmanzeige, ausgegeben werden können und mit dem Informationen oder Befehle in Form einer Tastatureingabe an das Navigationsgerät 2 von einer Bedienperson, beispielsweise dem Fahrer, übermittelt werden können. Weiterhin ist ein Steuergerät 5 vorgesehen. Das Steuergerät 5 ist zur Steuerung einer Brennkraftmaschine 6 vorgesehen, die das Fahrzeug 1 antreibt. In dem dargestellten Ausführungsbeispiel ist die Brennkraftmaschine 6 in Form einer Dieselbrennkraftmaschine ausgebildet. Die Brennkraftmaschine 6 verfügt über ein Abgassystem 7, in dem ein Partikelfilter 8 angeordnet ist. Weiterhin ist ein Sensor in Strömungsrichtung nach dem Partikelfilter 8 vorgesehen, der vom Steuergerät zur Überprüfung der Abgasqualität und zur Überprüfung des Beladungszustands des Partikelfilters 8 verwendet wird. Der Sensor 9 steht mit dem Steuergerät 5 in Verbindung.

Abhängig von der gewählten Ausführungsform ist eine Kommunikationsverbindung 10 zwischen dem Steuergerät 5 und dem Navigationsgerät 2 vorgesehen. Die Kommunikationsverbindung 10 kann in Form einer drahtlosen Funkverbindung oder in Form eines Netzwerkes oder Kabels ausgebildet sein.

Das Navigationsgerät 2 ermittelt aufgrund einer Startposition und einer Zielposition eine Fahrroute unter Berücksichtigung von Fahrstrecken, die in einer digitalen Straßenkarte abgelegt sind. Die Fahrstrecken weisen Gewichtungen auf, die beispielsweise angeben, ob es öfter Stop-and-Go-Situationen, Stauungen oder fließenden Verkehr gibt oder welche Durchschnittsgeschwindigkeit oder maximale Geschwindigkeit gefahren werden kann. Die digitale Straßenkarte ist im Datenspeicher 3 abgespeichert. Abhängig von wenigstens einem vorgegebenen Parameter wird vom Navigationsgerät unter Berücksichtigung der Gewichtungen aus den Fahrstrecken eine optimale Route ermittelt. Beispielsweise kann eine optimale Route eine schnellste Fahrroute oder eine kürzeste Fahrroute sein.

In der erfindungsgemäßen Ausführungsform berücksichtigt das Navigationsgerät 2 bei der Ermittlung der Fahrroute auch einen Zustand des Partikelfilters 8. Der Zustand des Partikelfilters 8 kann vom Steuergerät 5 mit Hilfe des Sensors 9 oder mit Hilfe eines theoretischen Modells ermittelt und an das Navigationsgerät 2 übermittelt werden. In einer weiteren Ausführungsform ermittelt das Navigationsgerät 2 aufgrund eines theoretischen Modells insbesondere unter Berücksichtigung der zurückgelegten Fahrstrecke und/oder des gefahrenen Geschwindigkeitsprofils den Beladungszustand des Partikelfilters. Der Partikelfilter ist insbesondere als Rußpartikelfilter ausgebildet. Zur Einhaltung von Grenzwerten ist es erforderlich, dass der Partikelfilter bei einer vollständigen Beladung wieder entladen wird, indem beispielsweise die Rußpartikel durch eine erhöhte Temperatur im Abgassystem abgebrannt werden. Weiterhin kann es für die Einhaltung der vorgegebenen Abgasgrenzwerte erforderlich sein, den Beladungszustand des Partikelfilters nicht weiter zu erhöhen.

Abhängig von dem Zustand des Partikelfilters kann es vorteilhaft sein, eine Fahrroute zu wählen, die zwar von der Fahrstrecke und/oder von der Fahrzeit etwas länger ist, aber beispielsweise keine weitere Beladung des Partikelfilters verursacht oder sogar eine Entladung des Partikelfilters ermöglicht. Diese Auswahl der Fahrroute in Abhängigkeit vom Zustand des Partikelfilters ist insbesondere dann von Vorteil, wenn die Beladung des Partikelfilters sich schon nahe der Kapazitätsgrenze, beispielsweise im Bereich von 80% bis 90% der maximalen Beladung des Partikelfilters befindet. In diesem Zustand des Partikelfilters sollten Stop-and-Go-Fahrstrecken vermieden werden und beispielsweise Fahrstrecken mit fließendem Verkehr bevorzugt für die Berechnung der Fahrroute berücksichtigt werden. Abhängig von der gewählten Ausführungsform kann die Berücksichtigung des Zustands des Partikelfilters wahlweise dem Fahrer zur Auswahl bereit gestellt werden. Der Fahrer kann über eine individuelle Konfiguration mit Hilfe des Ein-/Ausgabemittels 4 eine Berücksichtigung des Zustands, insbesondere des Beladungszustands des Partikelfilters, einstellen.

In einer weiteren Ausführungsform kann der Fahrer angeben, bis zu welcher prozentualen Verschlechterung des vorgegebenen Parameters für die Berechnung der Fahrroute der Zustand des Partikelfilters berücksichtigt werden soll. Dabei kann beispielsweise vorgegeben werden, dass eine Verlängerung von 5 bis 10% der Fahrstrecke oder der Fahrzeit in Kauf genommen wird, wenn dadurch keine weitere Beladung des Partikelfilters oder eine geringere zusätzliche Beladung des Partikelfilters oder sogar eine Entladung des Partikelfilters möglich ist.

In einer weiteren Ausführungsform verfügt das Navigationsgerät über Daten, die abhängig vom vorhandenen Partikelfilter und dessen Beladungszustand Grenzwerte für die weitere Beladung und/oder Werte, insbesondere eine mittlere Geschwindigkeit oder fließender Verkehr und eine Zeitdauer mit mittlerer Geschwindigkeit für eine Entladung des Partikelfilters vorschreiben. Somit kann das Navigationsgerät abhängig von dem vorgegebenen Wert individuell für den verwendeten Partikelfilter und dessen Beladungszustand eine Fahrroute wählen, die auf den Partikelfilter abgestimmt ist.

In einer weiteren Ausführungsform wird dem Navigationsgerät die Information übermittelt, bei welcher durchschnittlichen Geschwindigkeit oder über welche Zeitdauer mit welcher durchschnittlichen Geschwindigkeit die Brennkraftmaschine betrieben werden soll, damit eine gewünschte Regeneration des Partikelfilters oder eine verlangsamte Beladung des Partikelfilters oder keine weitere Beladung des Partikelfilters für die noch zu fahrende Fahrroute erreicht wird. Abhängig von der gewählten Ausführungsform kann das Navigationsgerät auch die durchschnittliche Geschwindigkeit und die Zeitdauer für die durchschnittliche Geschwindigkeit selbst in Abhängigkeit vom selbst berechneten Zustand, insbesondere vom berechneten Beladungszustand des Partikelfilters berechnen.

Die Berücksichtigung der zur Verfügung stehenden Fahrstrecken wird für eine optimale Fahrroute für einen gegebenen Zustand des Dieselpartikelfilters, beispielsweise in der Weise erreicht, dass jede Fahrstrecke mit einem Gewichtungsfaktor belegt wird. Dabei stellt ein hoher Gewichtungsfaktor eine gute Bewertung für den Zustand des Dieselpartikelfilters dar. Das Navigationsgerät ermittelt nun aufgrund der Gewichtungsfaktoren und der vorhandenen Fahrstrecken eine Fahrroute zwischen dem Start- und dem Zielpunkt, bei dem maximale Gewichtungspunkte für den Beladungszustand des Partikelfilters erreicht werden. In entsprechender Weise sind noch Gewichtungspunkte für die Länge der Fahrstrecke und die Fahrdauer der Fahrstrecken den Fahrstrecken zugeordnet. Somit kann eine optimierte Fahrroute ermittelt werden, bei der die Länge der Fahrroute und/oder die Fahrzeit der Fahrroute, d.h. ein vorgegebener Parameter für die Berechnung der Fahrroute, zwar nicht optimal ist, sich aber unter Berücksichtigung der für den Zustand des Dieselpartikelfilters vorteilhaften Fahrstrecken in einem akzeptablen Bereich befindet. Somit kann ein Kompromiss zwischen dem vorgegebenen Parametern, wie der kürzesten Fahrroute oder der kürzesten Fahrzeit, und einer Schonung des Partikelfilters, insbesondere einer geringeren weiteren Beladung oder keiner weiteren Beladung oder einer Regeneration des Dieselpartikelfilters erreicht werden.

Abhängig von der gewählten Ausführungsform kann das Steuergerät 5 auch eine Anfrage an das Navigationsgerät 2 senden, um eine für den Partikelfilter vorteilhafte Route zu wählen. Dabei kann das Steuergerät beispielsweise ein Geschwindigkeitsprofil, eine mittlere Geschwindigkeit und/oder die Zeitdauer, während der die mittlere Geschwindigkeit einzuhalten ist, an das Navigationsgerät 2 übermitteln. Das Navigationsgerät 2 kann die vom Steuergerät vorgegebenen Parameter und/oder Wünsche bei der Wahl der weiteren Route berücksichtigen. Liegt beispielsweise ein sogenannter Speed-Request-Befehl vor, mit dem das Steuergerät eine Route mit einer hohen Geschwindigkeit anfragt, so wird das Navigationsgerät bei Möglichkeit eine Route mit einer zu erwartenden höheren Geschwindigkeit wählen. So kann beispielsweise eine Autobahnstrecke oder eine Bundesstraßenstrecke vom Navigationsgerät als Route vorgeschlagen werden, wenn der dadurch in Kauf zu nehmende Umweg nicht allzu groß ist und im Bereich eines beispielsweise voreinstellbaren akzeptablen Bereichs eines Umweges und/oder einer längeren Fahrdauer liegt.

Zudem kann in einer weiteren Ausführungsform vom Steuergerät nicht nur eine mittlere Geschwindigkeit, sondern auch eine Weglänge bzw. eine Zeitdauer für die zu fahrende Geschwindigkeit in Form einer Regenerationszeit für den Dieselpartikelfilter vom Steuergerät an das Navigationsgerät übertragen werden.

## Patentansprüche

1. Verfahren zur Berechnung einer Fahrroute für ein Fahrzeug, wobei ausgehend von einem Startpunkt zu einem Zielpunkt unter Berücksichtigung einer digitalen Straßenkarte, eine nach einem vorgegebenen Parameter optimale Fahrroute berechnet wird, wobei für die Berechnung der Fahrroute ein Beladungszustand eines Partikelfilters eines Abgassystems berücksichtigt wird und eine Fahrroute gewählt wird, die vorteilhafter für den Beladungszustand des Partikelfilters ist, **dadurch gekennzeichnet, dass** der Beladungszustand des Partikelfilters aufgrund eines gefahrenen Geschwindigkeitsprofils und/oder einer gefahrenen Fahrroute berechnet wird.

2. Verfahren nach Anspruch 1, wobei über eine Eingabe eine Option für die Berechnung der Fahrroute wahlhar ist, und wobei die eingegebene Option bei der Berechnung der Fahrroute berücksichtigt wird.

3. Verfahren nach einem der Ansprüche 1 oder 2, wobei der Beladungszustand des Partikelfilters von einem Navigationssystem berechnet wird.

4. Verfahren nach einem der Ansprüche 1 bis 3, wobei für die Berechnung der Fahrroute zusätzlich ein Zustand einer weiteren Komponente, insbesondere der Beladungszustand eines Katalysators, die Temperatur der Brennkraftmaschine oder die Temperatur eines Bremssystems berücksichtigt wird.

5. Verfahren nach einem der Ansprüche 1 bis 4, wobei Werte für eine Schonung des Partikelfilters, insbesondere eine Fahrgeschwindigkeit und/oder eine Zeitdauer und eine Fahrgeschwindigkeit, abhängig vom Beladungszustand des Partikelfilters für die Berechnung der Fahrroute berücksichtigt werden.

6. Verfahren nach einem der Ansprüche 1 bis 5, wobei als Beladungszustand ein festgelegter Kapazitätsbereich für eine Beladung des Partikelfilters berücksichtigt wird.

7. Verfahren nach Anspruch 6, wobei bei der Wahl der Fahrroute eine Fahrstrecke mit geringerer Belastung für den Partikelfilter gewählt wird, obwohl eine für den vorgegebenen Parameter optimalere Fahrstrecke zur Verfügung steht.

8. Verfahren nach einem der Ansprüche 1 bis 7, wobei ein Wert vorgegeben ist oder wählhar ist, um den sich für den vorgegebenen Parameter die berechnete Fahrroute zugunsten der Berücksichtigung des Beladungszustandes des Partikelfilters verschlechtern darf.

9. Vorrichtung zur Berechnung einer Fahrroute für ein Fahrzeug (1) mit einer Recheneinheit (11), wobei die Recheneinheit (11) ausgehend von einem startpunkt zu einem Zielpunkt unter Berücksichtigung einer digitalen Straßenkarte eine nach einem vorgegebenen Parameter optimale Fahrroute berechnet, wobei die Recheneinheit (11) für die Berechnung der einen Beladungszustand eines Partikelfilters (8) eines Abgassystems (7)
berücksichtigt und eine Fahrroute wählt, die vorteilhafter für den Beladungszustand des Partikelfilters (8) ist, wobei die Recheneinheit den Beladungszustand des Partikelfilters aüfgrund eines zurückgelegten Geschwindigkeitsprofils berechnet.

10. Vorrichtung nach Anspruch 9, wobei die Recheneinheit (11) ausgebildet ist, eine informationen von einem Steuergerät. (5) zu empfangen, wobei sich die Information auf den Beladungszustand und/oder auf eine Regenerationsmußnahme für den Partikelfilter (8) bezieht, und wobei die Recheneinheit (11) bei der Berechnung der Fahrroute die Information berücksichtigt.

## Claims

1. Method for calculating a transport route for a vehicle, wherein a transport route which is optimum according to a predefined parameter is calculated from a starting point to a destination taking into account a digital road map, wherein a load state of a particle filter of an exhaust system is taken into account for the calculation of the transport route, and a transport route is selected which is more advantageous for the load state of the particle filter, **characterized in that** the load state of the particle filter is calculated on the basis of a velocity profile which has been implemented and/or a transport route which has been travelled on.

2. Method according to Claim 1, wherein an option for the calculation of the transport route can be selected by means of an input, and wherein the option which is input is taken into account in the calculation of the transport route.

3. Method according to one of Claims 1 or 2, wherein the load state of the particle filter is calculated by a navigation system.

4. Method according to one of Claims 1 to 3, wherein a state of a further component, in particular the load state of a catalytic converter, the temperature of the internal combustion engine or the temperature of a brake system, is additionally taken into account in the calculation of the transport route.

5. Method according to one of Claims 1 to 4, wherein values for protecting the particle filter, in particular a velocity and/or a time period and a velocity as a function of the load state of the particle filter are taken into account in the calculation of the transport route.

6. Method according to one of Claims 1 to 5, wherein a defined capacity range for a load of the particle filter is taken into account as a load state.

7. Method according to Claim 6, wherein a section of road with a relatively low load for the particle filter is selected during the selection of the transport route even though a section of road which is better for the predefined parameter is available.

8. Method according to one of Claims 1 to 7, wherein a value by which the calculated transport route can become worse for the predefined parameter in favour of taking into account the load state of the particle filter is predefined or can be selected.

9. Device for calculating a transport route for a vehicle (1) having a computing unit (11), wherein the computing unit (11) calculates a transport route which is optimum to a predefined parameter from a starting point to a destination taking into account a digital road map, wherein the computing unit (11) takes into account a load state of a particle filter (8) of an exhaust system (7) in the calculation of the transport route and selects a transport route which is more advantageous for the load state of the particle filter (8), wherein the computing unit calculates the load state of the particle filter on the basis of a speed profile which has been passed through.

10. Device according to Claim 9, wherein the computing unit (11) is designed to receive information from a control unit (5), wherein the information relates to the load state and/or to a regeneration measure for the particle filter (8), and wherein the computing unit (11) takes into account the information in the calculation of the route.

## Revendications

1. Procédé pour calculer un itinéraire pour un véhicule, l'itinéraire optimal étant calculé d'après un paramètre prédéfini en partant d'un point de départ vers un point de destination en tenant compte d'une carte routière numérique, un état de charge d'un filtre à particules d'un système d'échappement étant pris en compte pour le calcul de l'itinéraire et l'itinéraire qui est choisi étant le plus avantageux pour l'état de charge du filtre à particules, **caractérisé en ce que** l'état de charge du filtre à particules est calculé en se basant sur un profil de vitesse en déplacement et/ou un itinéraire parcouru.

2. Procédé selon la revendication 1, selon lequel une option pour le calcul de l'itinéraire peut être sélectionnée par le biais d'une saisie et selon lequel l'option saisie est prise en compte lors du calcul de l'itinéraire.

3. Procédé selon l'une des revendications 1 ou 2, selon lequel l'état de charge du filtre à particules est calculé par un système de navigation.

4. Procédé selon l'une des revendications 1 à 3, selon lequel un état d'un autre composant, notamment l'état de charge d'un catalyseur, la température du moteur à combustion ou la température d'un système de freinage, est pris en compte pour le calcul de l'itinéraire.

5. Procédé selon l'une des revendications 1 à 4, selon lequel des valeurs pour ménager le filtre à particules, notamment une vitesse de déplacement et/ou une durée et une vitesse de déplacement dépendantes de l'état de charge du filtre à particules, sont prises en compte pour le calcul de l'itinéraire.

6. Procédé selon l'une des revendications 1 à 5, selon lequel l'état de charge pris en compte est une plage de capacité constatée pour une charge du filtre à particules.

7. Procédé selon la revendication 6, selon lequel un parcours qui présente une charge plus faible pour le filtre à particules est sélectionné lors du choix de l'itinéraire, et ce bien qu'il existe un parcours plus optimal pour le paramètre prédéfini.

8. Procédé selon l'une des revendications 1 à 7, selon lequel une valeur est prédéfinie ou peut être sélectionnée, laquelle correspond à la dégradation tolérée de l'itinéraire calculé en faveur de la prise en compte de l'état de charge du filtre à particules pour le paramètre prédéfini.

9. Dispositif pour calculer un itinéraire pour un véhicule (1) comprenant une unité de calcul (11), l'unité de calcul (11) calculant l'itinéraire optimal d'après un paramètre prédéfini en partant d'un point de départ vers un point de destination en tenant compte d'une carte routière numérique, l'unité de calcul (11) tenant compte pour le calcul de l'itinéraire d'un état de charge d'un filtre à particules (8) d'un système d'échappement (7) et sélectionnant un itinéraire qui est plus avantageux pour l'état de charge du filtre à particules (8), l'unité de calcul calculant l'état de charge du filtre à particules en se basant sur un profil de vitesse en déplacement.

10. Dispositif selon la revendication 9, dans lequel l'unité de calcul (11) est configurée pour recevoir une information de la part d'un contrôleur (5), l'information se rapportant à l'état de charge et/ou à une mesure de régénération pour le filtre à particules (8) et l'unité de calcul (11) tenant compte de l'information lors du calcul de l'itinéraire.
